# EUROPEAN PATENT APPLICATION

(11) **EP 4 506 224 A1**
(43) Date of publication of application: **12.02.2025**
(21) Application number: 24176666.6
(22) Date of filing: 17.05.2024
(51) Int. Cl.: B60W 50/02, B60W 50/14, B60W 60/00

(54) **RECOGNITION STATE NOTIFICATION DEVICE**

(30) Priority: 08.08.2023 JP 2023129077
(71) Applicant: TOYOTA JIDOSHA KABUSHIKI KAISHA, Toyota-shi, Aichi-ken, 471-8571 (JP)
(72) Inventor: OHSUGI, Masamichi, Tokyo, 103-0022 (JP)
(74) Representative: J A Kemp LLP

(57) **Abstract**

A recognition state notification device includes: a confidence level calculation unit configured to calculate a confidence level in recognition of a recognition target recognized by a recognition unit; and a notification unit configured to notify a supervisor of a vehicle of a recognition target whose confidence level is equal to or lower than a reference value.

## Description

### CROSS-REFERENCE TO RELATED APPLICATIONS

This application is based upon and claims the benefit of priority from Japanese Patent Application No. 2023-129077, filed On August 8, 2023, the entire contents of which are incorporated herein by reference.

### BACKGROUND

### Field

The present disclosure relates to a recognition state notification device.

### Description of the Related Art

For example, Japanese Unexamined Patent Publication No. 2020-004069 discloses a device for designing a mechanical structure. This device designs the mechanical structure based on machine learning. In addition, the device calculates a confidence level of a design plan based on the result of machine learning. The device displays the calculated confidence level.

### SUMMARY

Artificial Intelligence (AI) is also used in the field of autonomous driving, where a vehicle travels automatically. For example, there is a possibility that a supervisor of an autonomous driving vehicle overrelies on an output of an autonomous driving system using the Al. Therefore, it is required to notify the supervisor of the autonomous driving vehicle so that the confidence level in recognition of the autonomous driving system can be appropriately grasped.

Therefore, the present disclosure describes a recognition state notification device that enables a supervisor to appropriately grasp a confidence level in recognition of an autonomous driving system.

One aspect of the present disclosure is a recognition state notification device in an autonomous driving system that executes autonomous driving of a vehicle using a recognition result of a recognition unit configured to recognize a surrounding target based on a detection result of an external sensor. The recognition state notification device includes: a confidence level calculation unit configured to calculate a confidence level in recognition of a recognition target that is a target recognized by a recognition unit; and a notification unit configured to notify a supervisor of a vehicle about a recognition target whose confidence level is equal to or lower than a reference value.

In the recognition state notification device, the notification unit may notify the recognition target whose confidence level is equal to or lower than the reference value in a mode according to a value of the confidence level. In the recognition state notification device described above, when notifying the recognition target whose confidence level is equal to or lower than the reference value, the notification unit may display, in the recognition target, a part recognized by the recognition unit and a part not recognized by the recognition unit in different modes.

The above device may further include a starting point setting unit configured to set a target serving as a starting point of control for the autonomous driving based on a course plan for the autonomous driving in the vehicle. The notification unit may notify the recognition target that is set as the target serving as the starting point of control by the starting point setting unit and has the confidence level equal to or lower than the reference value.

According to one aspect of the present disclosure, the supervisor can appropriately grasp the confidence level in recognition of the autonomous driving system.

### BRIEF DESCRIPTION OF THE DRAWINGS

FIG. 1 is a block diagram illustrating an example of an autonomous driving system including a recognition state notification device.
FIG. 2 is a flowchart illustrating a flow of notification processing of a confidence level of a recognition target performed in the recognition state notification device.

### DETAILED DESCRIPTION

Hereinafter, an exemplary embodiment will be described with reference to the drawings. In the drawings, the same or corresponding elements are denoted by the same reference numerals, and redundant description will be omitted.

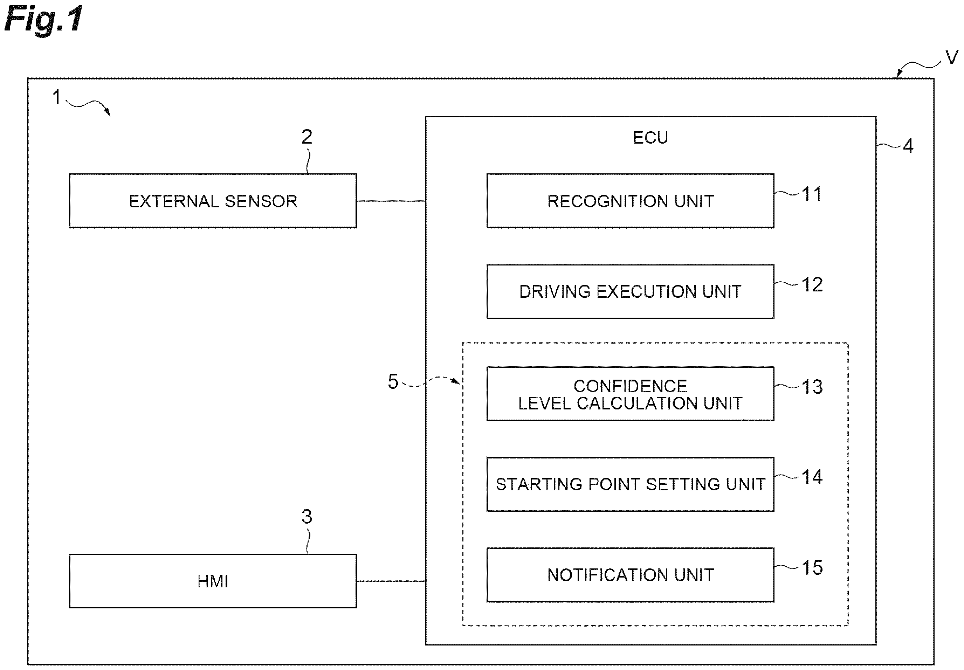

An autonomous driving system 1 illustrated in FIG. 1 is mounted on a host vehicle (vehicle) V that is capable of automatically traveling. That is, the host vehicle V is an autonomous driving vehicle. The autonomous driving system 1 executes autonomous driving that causes the host vehicle V to automatically travel. Some of functions of the autonomous driving system 1 may be installed outside the host vehicle V The autonomous driving system 1 includes an external sensor 2, a human machine interface (HMI) 3, and an electronic control unit (ECU) 4.

The external sensor 2 is an in-vehicle sensor that detects an external environment of the host vehicle V. The external sensor 2 may include a camera. The camera is an imaging device that captures an image of the external environment of the host vehicle V. The camera is provided, for example, on the back side of the windshield of the host vehicle V, and captures an image of a front side of the vehicle. The camera transmits imaging information on the external environment of the host vehicle V to the ECU 4. The camera may be a monocular camera or a stereo camera. A plurality of cameras may be provided. The camera may capture an image of a left side, a right side, and the like in addition to the front side of the host vehicle V.

The external sensor 2 may include a radar sensor. The radar sensor is a detection device that detects an object around the host vehicle V using radio waves (for example, millimeter waves) or light. The radar sensor includes, for example, millimeter wave radar or light detection and ranging (LIDAR). The radar sensor transmits radio waves or light to the periphery of the host vehicle V and receives radio waves or light reflected from the object to detect the object. The radar sensor transmits the detected object information to the ECU 4.

The HMI 3 is an interface for inputting and outputting information between the host vehicle V and an occupant. The HMI 3 has, for example, a display or a speaker. The occupant is a supervisor who monitors traveling of the host vehicle V. The supervisor may switch a driving state of the host vehicle V from autonomous driving to manual driving or assist the driving of the host vehicle V based on the information output from the HMI3.

The ECU 4 is an electronic control unit having a central processing unit (CPU), a read only memory (ROM), and a random access memory (RAM). The ECU 4 implements various functions, for example, by loading a program recorded in the ROM into the RAM and executing the program loaded into the RAM with the CPU. The ECU 4 may include a plurality of electronic units. The ECU 4 functionally includes a recognition unit 11, a driving execution unit 12, a confidence level calculation unit 13, a starting point setting unit 14, and a notification unit 15.

The recognition unit 11 recognizes a surrounding target based on the detection result of the external sensor 2. For example, the recognition unit 11 can recognize the surrounding target using an Al technology such as machine learning based on the detection result of the external sensor 2. The target recognized by the recognition unit 11 includes, for example, surrounding vehicles, white lines (dividing lines) of roads, pedestrians, and the like. The recognition unit 11 can recognize a type of the target in addition to a position and a shape of the target.

The driving execution unit 12 executes autonomous driving of the host vehicle V based on a known method. The driving execution unit 12 can control traveling of the host vehicle V by issuing an instruction to an actuator (drive actuator, brake actuator, steering actuator, and the like) used to control the traveling of the host vehicle V. For example, the driving execution unit 12 generates a course plan for autonomous driving based on the recognition result of the recognition unit 11 or the like, and controls the traveling of the host vehicle V along the course plan.

The confidence level calculation unit 13 calculates a confidence level in recognition of a recognition target that is a target recognized by the recognition unit 11. The confidence level calculation unit 13 can calculate the confidence level in recognition of the recognition target based on a known method. For example, the confidence level calculation unit 13 may calculate the confidence level based on temporal stability and continuity of the recognition result. For example, when the external sensor 2 includes a plurality of sensors, the confidence level calculation unit 13 may calculate the confidence level based on consistency of recognition results between the sensors. In addition, there is a case where a recognition result of a surrounding target can be acquired from another surrounding vehicle or the like. In this case, for example, the confidence level calculation unit 13 may calculate the confidence level by comparing a recognition result acquired from another surrounding vehicle or the like with a recognition result of the recognition unit 11. For example, the confidence level calculation unit 13 may calculate the confidence level based on an effectiveness degree (characteristic) of the external sensor 2 used for the recognition.

The starting point setting unit 14 sets a target serving as a starting point of the control for the autonomous driving based on the course plan for the autonomous driving in the host vehicle V. The target serving as the starting point of the control for the autonomous driving is a target that should be noted for executing the autonomous driving. For example, the starting point setting unit 14 may set the left and right dividing lines of the own lane as the target serving as the starting point of the control in order to travel along a lane center in the own lane on which the host vehicle V travels. For example, the starting point setting unit 14 may set a preceding vehicle as the target serving as the starting point of the control in order to maintain an appropriate inter-vehicle distance from the preceding vehicle while traveling in the own lane. For example, there may be another vehicle entering the own lane from an adjacent lane. In this case, the starting point setting unit 14 may set the another vehicle entering the own lane as the target serving as the starting point of the control in order to maintain the appropriate inter-vehicle distance with the another vehicle even after the another vehicle enters the own lane.

For example, the host vehicle V may change lanes from the own lane to the adjacent lane. In this case, the starting point setting unit 14 may set the left and right dividing lines of the adjacent lane as the target serving as the starting point of the control. Furthermore, in this case, the starting point setting unit 14 may set, as the target serving as the starting point of the control, another vehicle (a vehicle in the adjacent lane) traveling within a predetermined distance in a front-rear direction from a position immediately beside the host vehicle V in the adjacent lane.

For example, there is a case where the own lane on which the host vehicle V travels is a road on which a pedestrian or a bicycle may jump out into the own lane. In this case, the starting point setting unit 14 may set a parked vehicle, a wall, or the like that is large enough to hide a pedestrian or a bicycle as the target serving as the starting point of the control. The parked vehicle, the wall, or the like may be a parked vehicle, a wall, or the like whose lateral distance from a travel route of the course plan created at the previous time is within a predetermined distance. As the travel route, a route corresponding to a travel distance within a predetermined time may be used.

The notification unit 15 notifies the supervisor of the host vehicle V of a recognition target whose confidence level calculated by the confidence level calculation unit 13 is equal to or lower than a reference value among the recognition targets recognized by the recognition unit 11. The notification unit 15 notifies the recognition target using the HMI 3. The notifying the recognition target may include notifying a position of the recognition target such that the supervisor can grasp the position. The notifying the recognition target may include notifying the supervisor so that the supervisor can grasp the shape and/or type of the recognition target.

The notification unit 15 notifies the recognition target whose confidence level is equal to or lower than the reference value in a mode according to a value of the confidence level. For example, the notification unit 15 may change a color or a luminance according to the value of the confidence level. As a result, the supervisor can grasp the level of confidence level based on the mode of the notification of the recognition target whose confidence level has decreased.

Furthermore, when notifying the recognition target whose confidence level is equal to or lower than the reference value, the notification unit 15 may display, in the recognition target, a part recognized by the recognition unit 11 and a part not recognized by the recognition unit 11 in different modes. Specifically, for example, the notification unit 15 may display the recognition target whose confidence level is equal to or lower than the reference value together with detection information such as a camera image. The detection information may be point cloud information detected by the LIDAR. That is, the notification unit 15 superimposes and displays the image of the recognition target whose confidence level is equal to or lower than the reference value on the detection information such as the camera image. In this case, the notification unit 15 displays the part of the recognition target whose confidence level is equal to or lower than the reference value in a mode different from other parts. For example, the notification unit 15 displays a part of the recognition target whose confidence level is equal to or lower than a reference value, a part of the recognition target whose confidence level exceeds a reference value, and other parts in different modes. As a result, the supervisor can grasp how the target whose confidence level has decreased is recognized in the recognition unit 11 by viewing the display of the HMI 3. For example, when the dividing line is displayed, the supervisor can distinguish and recognize a part of the dividing line whose confidence level has decreased, a part whose confidence level is high, and a part that is detected by the camera or the like but is not recognized by the recognition unit 11.

The notification unit 15 can also perform notification based on a target serving as a starting point of control of autonomous driving set by the starting point setting unit 14. Here, the notification unit 15 may notify a recognition target that is set as the target serving as the starting point of the control by the starting point setting unit 14 and has a confidence level equal to or lower than a reference value. As a result, the supervisor can grasp a recognition state of the recognition target serving as the starting point of the control in the autonomous driving, among the recognition targets.

As described above, the confidence level calculation unit 13, the starting point setting unit 14, and the notification unit 15 function as the recognition state notification device 5 that notifies the recognition state of the recognition target by the recognition unit 11. In the present embodiment, as an example, the recognition state notification device 5 is provided integrally with the autonomous driving system 1. However, the recognition state notification device 5 may be provided separately from the autonomous driving system 1 that performs autonomous driving. Further, for example, the recognition state notification device 5 can notify a supervisor other than the occupant of the host vehicle V. In this case, for example, the recognition state notification device 5 may notify a supervisor (for example, a remote operator of the host vehicle V) in an information center that manages traveling of a plurality of vehicles.

The recognition unit 11 of the autonomous driving system 1 may calculate a confidence level in recognition of a recognition target. In this case, the confidence level calculation unit 13 may include the recognition unit 11 that calculates the confidence level. Furthermore, even when the recognition unit 11 calculates a confidence level in recognition of a recognition target, the confidence level calculation unit 13 may be provided separately from the recognition unit 11. That is, the confidence level calculation unit 13 may calculate a confidence level of a recognition target exclusively for making the notification.

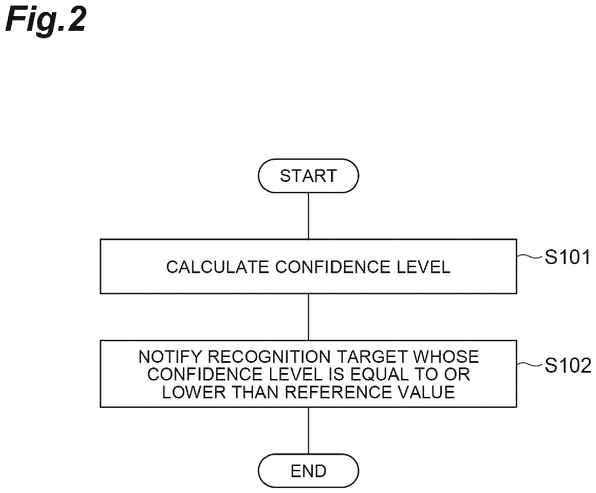

Next, a flow of notification processing of the confidence level of the recognition target performed by the recognition state notification device 5 will be described. The processing illustrated in FIG. 2 is performed, for example, during execution of autonomous driving of the host vehicle V. However, this processing may be performed at a timing other than during the execution of the autonomous driving. In addition, when the processing illustrated in FIG. 2 reaches the end, the processing is started from the start again after a predetermined time.

As illustrated in FIG. 2, in S101, the confidence level calculation unit 13 calculates a confidence level in recognition of a recognition target recognized by the recognition unit 11. In step S102, the notification unit 15 notifies the supervisor of the host vehicle V of a recognition target whose confidence level is equal to or lower than a reference value among the recognition targets whose confidence level has been calculated by the confidence level calculation unit 13. Here, the notification unit 15 can notify the recognition target in the above-described various modes. In addition, here, as described above, the notification unit 15 can notify the recognition target whose confidence level is equal to or lower than the reference value with respect to a target serving as a starting point of control of autonomous driving set by the starting point setting unit 14.

As described above, according to the recognition state notification device 5 in the autonomous driving system 1, the supervisor of the host vehicle V can appropriately grasp the confidence level in recognition of the autonomous driving system.

Although an embodiment of the present disclosure has been described above, the present disclosure is not limited to the above embodiment. At least part of the embodiment and various modifications described above may be freely combined.

## Claims

1. A recognition state notification device in an autonomous driving system that executes autonomous driving of a vehicle using a recognition result of a recognition unit configured to recognize a surrounding target based on a detection result of an external sensor, the recognition state notification device comprising:
a confidence level calculation unit configured to calculate a confidence level in recognition of a recognition target that is the target recognized by the recognition unit; and
a notification unit configured to notify a supervisor of the vehicle about the recognition target whose confidence level is equal to or lower than a reference value.

2. The recognition state notification device according to claim 1, wherein the notification unit is configured to notify the recognition target whose confidence level is equal to or lower than the reference value in a mode according to a value of the confidence level.

3. The recognition state notification device according to claim 1 or 2, wherein the notification unit is configured to display, in the recognition target, a part recognized by the recognition unit and a part not recognized by the recognition unit in different modes when notifying the recognition target whose confidence level is equal to or lower than the reference value.

4. The recognition state notification device according to any one of claims 1 to 3, further comprising:
a starting point setting unit configured to set a target serving as a starting point of control for the autonomous driving based on a course plan for the autonomous driving in the vehicle, wherein
the notification unit is configured to notify the recognition target that is set as the target serving as the starting point of the control by the starting point setting unit and has the confidence level equal to or lower than the reference value.
